(19)

Europäisches
Patentamt
European
Patent Office
Office européen
des brevets

(11) **EP 2 139 090 A1**

(12) **EUROPEAN PATENT APPLICATION**

(43) Date of publication:
**30.12.2009 Bulletin 2009/53**

(51) Int Cl.:
**H02J 3/32** $^{(2006.01)}$

(21) Application number: **08158879.0**

(22) Date of filing: **24.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **ABB Research Ltd.**
**8050 Zürich (CH)**

(72) Inventors:
• **Bühler, Tilo**
**5430 Wettingen (CH)**

• **Oudalov, Alexandre**
**5442 Fislisbach (CH)**
• **Chartouni, Daniel**
**5430 Wettingen (CH)**

(74) Representative: **ABB Patent Attorneys**
**C/o ABB Schweiz AG**
**Intellectual Property (CH-LC/IP),**
**Brown Boveri Strasse 6**
**5400 Baden (CH)**

(54) **Method for operating a battery energy storage system**

(57) The present invention is concerned with the operation of a battery energy storage system (BESS) connected to an electric power system. The upper and lower state-of-charge (SoC) set-points of the BESS are adapted based on the analysis of the historical frequency data of the power system. A time dependent modulation function is determined for the upper and lower SoC set-points which avoids unwanted charging and discharging events.

FIG. 3b

**Description**

FIELD OF THE INVENTION

The present invention relates generally to the configuration and operation of an electric power system. The invention refers to a method for operating a battery energy storage system (BESS).

BACKGROUND OF THE INVENTION

An electric power system is unique in that aggregate production and consumption must be matched instantaneously and continuously. Unexpected loss of generating units or transmission lines, or errors in daily load forecast, result in sudden imbalances between generation and consumption. Such imbalances lead to frequency deviations from the nominal frequency $f_{nom}$, of the power system. This is problematic because generators may get disconnected by over-/under-frequency protection systems and cause even larger deviations leading to a system blackout. Loads such as rotating machines, need to operate at constant frequency and therefore frequency deviations would result in the interruption of various manufacturing processes. Therefore, an electric power system needs a frequency balancing reserve power in order to respond to such frequency deviations.

A frequency balancing reserve is generally provided by thermal and hydro generators that are synchronized with a grid or electric power system. This frequency balancing reserve can be ramped up quickly to provide reserve power. Power systems usually keep enough balancing reserves available to compensate for the worst credible contingency. This is typically either the loss of the largest generation unit or a fixed percentage of the system peak load. Typically, system peak load occurs in the morning or evening hours where additional electric power is needed in cities. The amount of reserve power in central Europe is defined by the Union for the Co-ordination of Transmission of Electricity (UCTE) grid code.

A BESS can be an effective supplier of a frequency balancing reserve. A BESS may absorb power from the grid when the actual frequency is above a defined frequency tolerance band thereby charging the battery, and a BESS may provide power to the grid when the actual frequency is below the frequency tolerance band, in that case discharging the battery. Outside the frequency tolerance band, $f_{nom} \pm f_{tol}$, (where $f_{nom}$ is the nominal frequency of the power system and $f_{tol}$ is the tolerance frequency of the power system, e.g. in UCTE the $f_{tol}$ is 20 mHz) the amount of power that needs to be delivered or absorbed is defined by the power to frequency deviation function. This is a linear function, where an amount of injected/absorbed power from/to the BESS is defined by the frequency deviation:

$$\Delta P[\%] = \Delta f[\%]$$

For example, a frequency deviation of 200 mHz requires the activation of all (100%) available primary frequency balancing reserve in the UCTE grid. In the case of a frequency deviation of -110 mHz, the BESS must supply 50% of its power allocated for a frequency regulation.

Such use of a BESS for the supply of a frequency balancing reserve is known in the art and is also described in an article by D. Kottick and M. Blau, entitled "Operational and economic benefits of battery energy storage plants", Electrical Power and Energy Systems, vo1.15, no.6, 1993, pp.345-349.

JP 57156674 (to Tokyo Shibaura Electric Co.) discloses a controller for electric power generation by battery. The system described therein enables management of electric power generated by batteries and other generators.

However, a problem associated with known BESS installations is that in order to provide a reliable frequency balancing reserve, the battery capacity is usually over-dimensioned and consequently expensive. In order to overcome this problem, it is known in the art to provide the following solution.

WO 2007/104167 describes a method of operation of a BESS in which a lower state-of-charge set-point (SoC1) and an upper state-of-charge set-point (SoC2) of the battery are determined. These set-points lie between the minimum state-of-charge (SoCmin), wherein the battery is empty, and the maximum state-of-charge (SoCmax), wherein the battery is fully charged, respectively. The BESS is controlled with the aim that the SoC of the battery is maintained in the preferred band between the SoC1 and SoC2. The subject matter of WO 2007/104167 is included in the present description by association.

In such a BESS operational method, the battery is charged from the grid (usually at a rate of 0.1-10% of the BESS nominal power $P_{nom}$) if the SoC is below the SoC1 set-point, and electric energy is discharged from the battery into the grid (usually at a rate of 0.1-10% of nominal power) if the SoC is above the SoC2 set-point, when the actual frequency is inside the frequency tolerance band. Practically, the electric energy discharged from the battery can be sold on the energy spot market. Further, if the battery is fully charged, energy can be dissipated in resistors.

Such an operational method may have the advantage of reducing the required battery capacity and increasing profitability of the BESS. However, a disadvantage associated with this operational method is that the actual SoC of the battery is relatively frequently outside of the preferred, fixed SoC band. As a consequence, relatively frequent discharging and charging is necessary. Problematically, such undesired charging and discharging events are known to decrease the battery life.

DESCRIPTION OF THE INVENTION

It is therefore an objective of the invention, to improve the performance of a BESS as an effective supplier of a frequency balancing reserve. In particular, to overcome the problem of frequent charging and discharging events of the battery when the frequency is in the tolerance band.

This objective is achieved by a method and system for operating a BESS according to claims 1 and 6. Further preferred embodiments are disclosed in the dependent claims.

According to a first aspect of the invention a method is provided for operating a BESS for frequency regulation of a power grid. The BESS comprising a battery having a dynamically adjustable state-of-charge lower set-point (SoC1) and state-of-charge upper set-point (SoC2), and the grid having a predetermined nominal frequency. The method comprises obtaining a historic average frequency-time profile of the grid for a predetermined period, identifying periods when an expected average frequency is above and below the nominal frequency, reducing at least one of the state-of-charge lower and upper set-points prior to a period when the expected average frequency is above the nominal frequency, and increasing at least one of the state-of-charge lower and upper set-points prior to a period when the expected average frequency is below the nominal frequency.

Advantageously, the historic average frequency-time profile may be the average over, for example, 30 days.

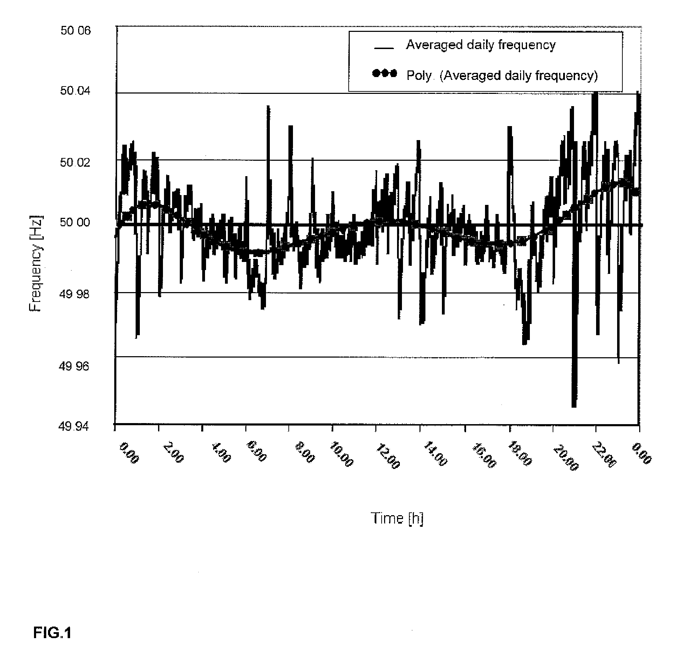

Preferably, the historic average frequency-time profile is a historic smooth average frequency-time profile. This may be a smooth fit function of an average frequency-time profile for the predetermined period of, for example, a day. It is also possible that the daily average frequency profile (shown as the solid line in Figure 1) is used as the average frequency-time profile.

Preferably, the method step of identifying periods when an expected average frequency is above or below the nominal frequency, further comprises calculating a required battery charging power ($P_{in}$) or discharging power ($P_{out}$) corresponding to the identified period. In a preferred embodiment, the identified expected period may be between 5 minutes to 60 minutes.

Further, the method may comprise utilising the calculated battery charging power ($P_{in}$) or discharging power ($P_{out}$) to calculate a required battery energy throughput during charging ($E_{in}$) or during discharging ($F_{out}$) for the identified period.

Preferably, the state-of-charge lower and upper set-points are changed by the calculated battery energy throughput during charging ($E_{in}$) or during discharging ($F_{out}$) for the identified period, in order to obtain a time dependent modulation function:

$$\text{SoC1}(t) = \text{SoC1}(t\text{-}1) - E_{in} \quad \text{AND/OR} \quad \text{SoC2}(t) = \text{SoC2}(t\text{-}1) - E_{in}$$

$$\text{SoC1}(t) = \text{SoC1}(t\text{-}1) + E_{out} \quad \text{AND/OR} \quad \text{SoC2}(t) = \text{SoC2}(t\text{-}1) + E_{out}$$

According to a second aspect of the invention a BESS is provided for frequency regulation of a power grid. The BESS comprises a battery which is connectable to the grid by means of a converter and a transformer. The BESS further comprises a control unit for controlling the converter to either charge or discharge the battery in accordance with the first aspect of the invention.

Preferably, the BESS comprises a data storage unit connected to the control unit for storing historical frequency-time profiles of the grid and calculating average frequency-time profiles of the grid. Advantageously, the data storage unit may also calculate smooth average frequency-time profiles from historic average frequency-time profiles.

The new operation strategy using dynamically adjustable SoC set-points has two advantageous effects, both improving the profitability of the BESS. First, the amount of charged and discharged kW-hours whilst the grid frequency is inside the tolerance band is reduced and therefore the life time of the battery is increased. Second, the required minimum capacity of the battery is reduced, thereby lowering the BESS cost.

BRIEF DESCRIPTION OF THE DRAWINGS

The subject matter of the invention will be explained in more detail in the following text with reference to preferred exemplary embodiments, which are illustrated in the attached drawings, in which:

Figure 1 graphically illustrates a daily frequency profile of an exemplary power grid averaged over approximately 30 days (both averaged and smooth average curves).

Figure 2 shows a flow diagram of the operational method of the present invention.

Figure 3a graphically illustrates a SoC profile of a BESS with fixed SoC levels.

Figure 3b graphically illustrates a SoC profile of a BESS with dynamically adjusted SoC levels in accordance with the present invention.

DETAILED DESCRIPTION OF PREFERRED EMBODIMENTS

The graph of Figure 1 shows a daily frequency profile of such an electric power system averaged over approximately 30 days. The solid line indicates the actual averaged daily frequency and the dotted line indicates a smooth fit function, also referred to as a smooth average, showing the daily trend behaviour. The skilled person will be aware of several methods to compute such a smooth average from the averaged daily frequency, such as a standard polynomial function.

Synchronous generators are designed to operate at a nominal frequency of 50 Hz in Europe and 60 Hz in USA. With reference to the times indicated on the x-axis, the times where the smooth average frequency is below nominal frequency, generally occurs between 4:00 - 10:00 and again between 16:00 - 20.00, during which times the power grid experiences a high load and a high rate of change of the load. It can be observed that between 20:00 - 04:00 the power grid experiences a low load.

With reference to Figure 1, it can be observed that the smooth average frequency of a power system can lie above or below the nominal frequency 50 Hz (in UTCE, Europe). For example, between 20:00 - 04:00 the smooth average frequency lies above the nominal frequency 50 Hz. Further, it can also be observed that short term frequency excursions occur approximately each hour due to a change in a generation/load schedule, appearing as repetitious spikes in the actual averaged daily frequency profile (the solid line in Figure 1).

To obtain a greater accuracy in trends of power system frequency, it is preferable to have a large set of historic data.

A BESS operating within the predefined limits of a lower SoC set-point, SoC1, and an upper SoC set-point, SoC2, is considered. These set-points lie between the minimum state-of-charge SoCmin, wherein the battery is empty, and the maximum state-of-charge SoCmax, wherein the battery is fully charged, respectively. The state-of-charge of the battery is monitored and the battery is charged from the grid, if the state-of-charge is below SoC1 and the actual frequency is inside a tolerance band, and electric energy is discharged from the battery into the grid, if the state-of-charge of the battery is above the SoC2 and the actual frequency is inside a tolerance band.

The method of the present invention is based on analysis of the smooth average daily frequency profile of a power grid, such as the dotted line profile in Figure 1. The predicted frequency of the power system resulting from the analysis of the frequency profile is denoted $f_{expected}$. Specifically, the invention concerns a time-dependent modulation function for the SoC1 and the SoC2 for the BESS. As a prerequisite for the method of the present invention, the SoC1 and the SoC2 for the BESS must be dynamically adjustable and programmable in advance.

The time-dependent modulation function is calculated in the light of two scenarios:

Firstly, when it is predicted that a period of relatively high frequency will occur in the next identified period t (i.e. the expected frequency $f_{expected}$ is above the nominal frequency), the SoC2(t) can be reduced:

IF $f_{expected} > f_{nom}$ THEN decrease the SoC1 set-point in order to decrease the re-charging of the battery, OR/AND decrease the SoC2 set-point.

It is noted that unnecessary re-charging of the battery is costly. Further, through decreasing the SoC2 set-point, extra benefit may be gained through selling more energy on the energy spot market.

Secondly, when it is predicted that a period of relatively low frequency will occur in the next identified period $t$ (i.e. the expected frequency $f_{expected}$ is below the nominal frequency), the SoC1 can be increased:

IF $f_{expected} < f_{nom}$ THEN increase the SoC1 set-point in order to increase the re-charging of the battery OR/AND increase the SoC2 set-point.

Thus, following the analysis of the historic smooth averaged daily frequency profile of the power grid and with reference to the two cases described above, the time dependent modulation function for the SoC1 set-point and SoC2 set-point in accordance with the present invention can be calculated through the following steps:

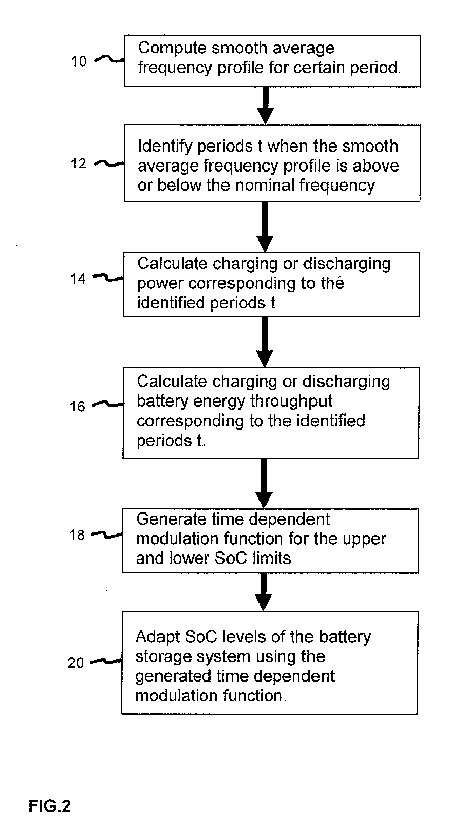

With reference to Figure 2, in the first step 10, a smooth average frequency profile for a certain period (e.g. a day) is computed for the electric power system.

In the second step 12, a smooth average frequency deviation from the nominal frequency (when the expected frequency is below/above the nominal frequency) is identified.

In the third step 14, a charging/discharging power of the battery, $P_{in/out}$, corresponding to the identified frequency deviation between expected (the smooth average) and nominal frequency is calculated using the defined power to frequency deviation function for the identified period t.

$$\Delta P_{in/out}\ [\%] = \Delta f\ [\%]$$

In a fourth step 16, the required battery energy throughput, $E_{in/out}$, is calculated utilising the fact that energy may be calculated as the integral of power over a time period.

$$E_{in/out} = \int P_{in/out}(t)dt$$

Here, $t$ is the identified period of modulation (e.g. 5-60 min) of time dependent function for the SoC1 set-point and SoC2 set-point.

The fifth step 18 comprises generating the time dependent modulation function for the upper and lower SoC set-points, SoC2($t$) and SoC1($t$). This is achieved by changing SoC2 and SoC1 by $E_{in/out}$ for the identified period $t$, and thereby generating the time dependent modulation function:

$$\text{SoC1}(t) = \text{SoC1}(t\text{-}1) - E_{in} \quad \text{AND/OR} \quad \text{SoC2}(t) = \text{SoC2}(t\text{-}1) - E_{in}$$

$$\text{SoC1}(t) = \text{SoC1}(t\text{-}1) + E_{out} \quad \text{AND/OR} \quad \text{SoC2}(t) = \text{SoC2}(t\text{-}1) + E_{out}$$

Thus, in a final step 20, the SoC set-points of the BESS are adapted using this time dependent modulation function for the identified period t.

Advantageously, the time dependent modulation function for the upper and lower SoC set-points avoids unwanted charging and discharging events as well as the time of use of the emergency resistors is reduced. Consequently, this method results in an improved operating strategy of the BESS because the SoC set-points of the BESS are adapted based on the analysis of the historical frequency data of the power system which is constantly updated with new measurements.

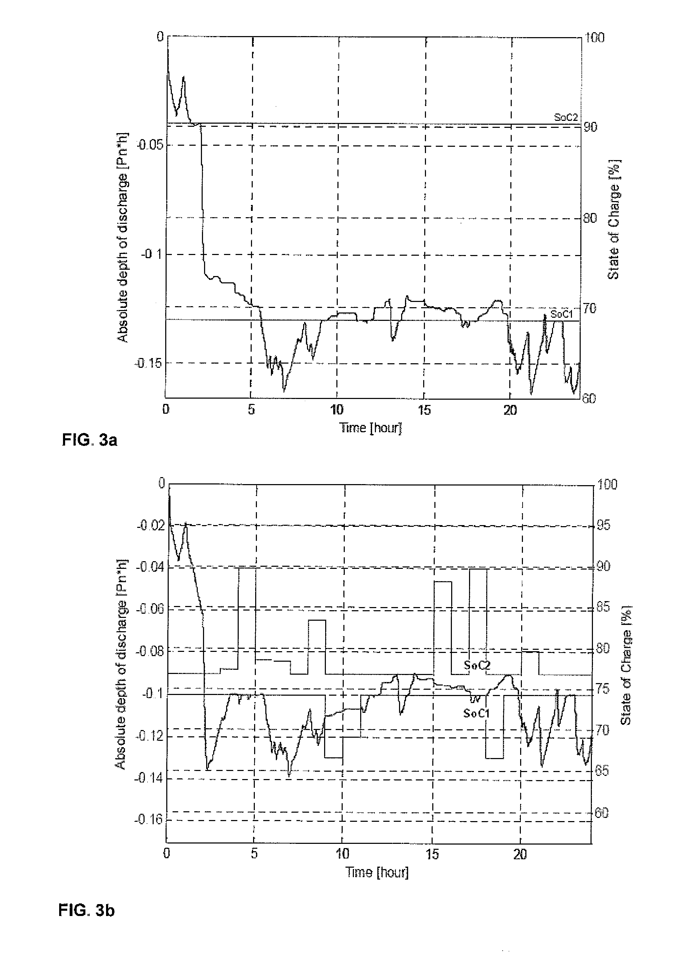

Figures 3a and 3b illustrate an actual example of the operational benefits of the present invention. Specifically, Figure 3a graphically shows a SoC profile for an actual BESS operating with fixed SoC set-points. The abscissa covers a 24 hour period and the ordinate records the absolute depth of discharge, $P_{nom}$*h, where $P_{nom}$ is the nominal (rated) power of the BESS in MW and h is hours. $P_{nom}$ is usually equal to the contracted frequency balancing reserve. The SoC2 set-point is fixed at 91% and the SoC1 set-point is fixed at 68%. It can be seen that the absolute depth of discharge shows relatively large fluctuations and reaches the minimum value of -0.17.

Figure 3b graphically shows a SoC profile for an actual BESS operating with dynamically adjusted SoC set-points in accordance with the present invention. The abscissa covers a 24 hour period and the ordinate records the absolute depth of discharge, $P_{nom}$*h. The SoC2 set-point is modulated between 77% and 90%, and the SoC1 set-point is modulated between 67% and 74%. Consequently it can be seen that the absolute depth of discharge shows relatively smaller fluctuations and the minimum value is limited by -0.14.

For a 1 MW BESS, the required minimum BESS capacity is reduced from 0.827 MWh for a BESS operating with fixed SoC set-points, to 0.778 MWh for a BESS operating with dynamically adjusted SoC set-points. Hence, the operational scheme recorded in Figure 3b shows a 6% improvement in BESS capacity (which leads to a cost reduction).

In the actual system illustrated in Figures 3a and 3b, it is noted that additional benefit is obtained through sale of the surplus electrical energy during the periods of expected high frequency is increased by 33% from 0.116 MWh to 0.172 MWh, respectively.

In the example scenario illustrated in Figure 3b it can be seen that hourly modulation of both the SoC1 set-point and SoC2 set-point is utilized. It would be clear to the skilled person that modulation in shorter time periods may be advantageously utilized where a frequency profile of greater accuracy has been originally recorded.

Further, the skilled person would be aware that the system of the present invention would successfully lower the BESS cost due to the reduced required minimal capacity of the battery in comparison with the known BESS arrangements. Thus, a new BESS can be installed with a smaller capacity (which would be less expensive) or when the batteries need replacing in existing BESS installations (e.g. lead-acid batteries are usually replaced after 4-6 years of operation) a smaller number of new batteries will be put in operation.

**Claims**

1. A method for operating a battery energy storage system provided for frequency regulation of a grid, said battery energy storage system comprising a battery having a dynamically adjustable state-of-charge lower setpoint (SoC1) and state-of-charge upper setpoint (SoC2), and said grid having a predetermined nominal frequency; the method comprising:

   obtaining a historic average frequency-time profile of the grid for a predetermined period,
   identifying (12) periods (t) when an expected average frequency is above or below the nominal frequency,
   reducing (20) at least one of the state-of-charge lower and upper setpoints (SoC1, SoC2) prior to a period when the expected average frequency is above the nominal frequency, and
   increasing (20) at least one of the state-of-charge lower and upper setpoints (SoC1, SoC2) prior to a period when the expected average frequency is below the nominal frequency.

2. The method according to claim 1, wherein the historic average frequency-time profile is a historic smooth average frequency-time profile.

3. The method according to claim 1 or claim 2, wherein the step of identifying periods when an expected average frequency is above or below the nominal frequency, further comprises:

   calculating (14) a required battery charging power ($P_{in}$) or discharging power ($P_{out}$) corresponding to the identified period ($t$).

4. The method according to claim 3, further comprising:

   utilising the calculated battery charging power ($P_{in}$) or discharging power ($P_{out}$) to calculate (16) a required battery energy throughput during charging ($E_{in}$) or during discharging ($E_{out}$) for the identified period (t).

5. The method according to claim 4, further comprising:

   changing the state-of-charge lower and upper setpoints (Soc1, SoC2) by the calculated battery energy throughput during charging ($E_{in}$) or during discharging ($E_{out}$) for the identified period (t), in order to obtain (18) a time dependent modulation function:

$$SoC1(t) = SoC1(t\text{-}1) - E_{in} \quad \text{AND/OR} \quad SoC2(t) = SoC2(t\text{-}1) - E_{in}$$

$$SoC1(t) = SoC1(t\text{-}1) + E_{out} \quad \text{AND/OR} \quad SoC2(t) = SoC2(t\text{-}1) + E_{out}$$

**6.** A battery energy storage system, comprising a battery which is connectable to the grid by means of a converter and a transformer, and a control unit for controlling the converter to either charge or discharge the battery in accordance with the method of any of claims 1 to 5.

**7.** The battery energy storage system according to claim 6, further comprising a data storage unit connected to the control unit for storing historical frequency-time profiles of the grid and calculating average frequency-time profiles of the grid.

FIG.1

FIG.2

FIG. 3a

FIG. 3b

**EUROPEAN SEARCH REPORT**

Application Number

EP 08 15 8879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2007/104167 A (ABB RESEARCH LTD [CH]; OHLER CHRISTIAN [CH]; OUDALOV ALEXANDER [CH]; C) 20 September 2007 (2007-09-20)<br>* sentence 4; claim 1 *<br>* sentence 5; claim 1 *<br>* sentence 6; claim 4 *<br>* page 4, line 8 - line 9 *<br>* page 7, line 2 *<br>* page 9, line 8 - line 9 *<br>* page 9, line 7 - line 9 *<br>* sentence 18 - sentence 20; claim 1 *<br>* page 13, line 21 *<br>* page 13, line 22 *<br>* page 13, line 23 *<br>* page 13, line 23 - line 25 *<br>* page 14, line 8 *<br>* page 14, line 8 - line 9 *<br>----- | 1-7 | INV.<br>H02J3/32 |
| A | ALEXANDRE OUDALOV ET AL: "Optimizing a Battery Energy Storage System for Primary Frequency Control"<br>IEEE TRANSACTIONS ON POWER SYSTEMS, IEEE SERVICE CENTER, PISCATAWAY, NJ, US,<br>vol. 22, no. 3,<br>1 August 2007 (2007-08-01), pages 1259-1266, XP011189268<br>ISSN: 0885-8950<br>* abstract *<br>* page 1265; figure 14 *<br>----- | 1,2 | |
| A | US 2006/276938 A1 (MILLER CRAIG H [US] MILLER CRAIG HOWARD [US]) 7 December 2006 (2006-12-07) | 1-7 | **TECHNICAL FIELDS SEARCHED (IPC)**<br>H02J<br>G06F<br>G01R |
| A | * figures 11,13 *<br>* paragraph [0027] *<br>* paragraph [0112] *<br>* paragraph [0113] *<br>-----<br>-/-- | | |

The present search report has been drawn up for all claims

| Place of search | Date of completion of the search | Examiner |
|---|---|---|
| Munich | 4 December 2008 | Fiat, Cyrille |

# EP 2 139 090 A1

Europäisches
Patentamt

European
Patent Office

Office européen
des brevets

## EUROPEAN SEARCH REPORT

Application Number

EP 08 15 8879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MALY D K ET AL: "Optimal battery energy storage system (BESS) charge scheduling with dynamic programming" IEE PROCEEDINGS: SCIENCE, MEASUREMENT AND TECHNOLOGY, IEE, STEVENAGE, HERTS, GB, vol. 142, no. 6, 1 November 1995 (1995-11-01), pages 453-8, XP006004445 ISSN: 1350-2344 * abstract * * page 456, paragraph 4.4 - page 457 * ----- | 1-7 | |
| A | LEE T-Y ET AL: "Effect of the battery energy storage system on the time-of-use rates industrial customers" IEE PROCEEDINGS: GENERATION, TRANSMISSION AND DISTRIBUTION, INSTITUTION OF ELECTRICAL ENGINEERS, GB, vol. 141, no. 5, 1 January 1994 (1994-01-01), pages 521-8, XP006001870 ISSN: 1350-2360 * abstract * * page 523, paragraph 4.1; figure 1 * ----- | 1-7 | |
| | | | TECHNICAL FIELDS SEARCHED (IPC) |

The present search report has been drawn up for all claims

| Place of search | Date of completion of the search | Examiner |
|---|---|---|
| Munich | 4 December 2008 | Fiat, Cyrille |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

**ANNEX TO THE EUROPEAN SEARCH REPORT
ON EUROPEAN PATENT APPLICATION NO.**

EP 08 15 8879

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2008

| Patent document cited in search report | | Publication date | Patent family member(s) | | Publication date |
|---|---|---|---|---|---|
| WO 2007104167 | A | 20-09-2007 | NONE | | |
| US 2006276938 | A1 | 07-12-2006 | US WO | 2007276547 A1 2006132760 A2 | 29-11-2007 14-12-2006 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57156674 B

- WO 2007104167 A

**Non-patent literature cited in the description**

- **D. Kottick ; M. Blau.** Operational and economic benefits of battery energy storage plants. *Electrical Power and Energy Systems,* 1993, vol. 15 (6), 345-349